# EUROPÄISCHE PATENTSCHRIFT

(11) **EP 1 015 794 B1**
(45) Veröffentlichungstag und Bekanntmachung des Hinweises auf die Patenterteilung: **16.05.2001**
(21) Anmeldenummer: 98946403.7
(22) Anmeldetag: 21.08.1998
(51) Int. Cl.: F16H 3/00, F16H 37/04

(54) **WECHSELGETRIEBE**
GEARBOX
BOITE DE VITESSE

(30) Priorität: 19.09.1997 DE 19741440
(43) Veröffentlichungstag der Anmeldung: 05.07.2000
(73) Patentinhaber: Bayerische Motoren Werke Aktiengesellschaft, 80788 München (DE)
(72) Erfinder: JUNG, Thomas, D-85757 Karlsfeld (DE)
(74) Vertreter: Zollner, Richard
(86) Internationale Anmeldenummer: EP9805327
(87) Internationale Veröffentlichungsnummer: WO9915810

(56) Entgegenhaltungen:
- EP-A- 0 476 794
- WO-A-95/24574
- GB-A- 2 195 721
- US-A- 1 870 076
- US-A- 2 330 821
- US-A- 4 641 549
- US-A- 5 259 260

## Beschreibung

Die Erfindung betrifft ein Wechselgetriebe gemäß dem Oberbegriff des Anspruchs 1, insbesondere ein Wechselgetriebe für Kraftfahrzeuge. Ein derartiges Getriebe ist aus der US-A-5 259 260 bekannt.

Es sind weiterhin verschiedene Arten von Wechsel- oder Übersetzungsgetrieben allgemein bekannt. Solche Getriebe werden beispielsweise in einem Kraftfahrzeug zur Änderung der Drehzahl eines Motors mit einem gewissen Übersetzungsverhältnis oder Wandlung des Drehmoments eingesetzt. Ferner kann durch ein solches Getriebe der Leerlauf eines Antriebsmotors bei stehendem Fahrzeug sichergestellt werden. Schließlich ist es mittels eines Getriebes möglich, den Drehsinn der Abtriebswelle umzukehren.

Ein einfaches Wechselgetriebe ist durch ein Handschaltgetriebe, mit einer Antriebs-, einer Abtriebs- sowie einer Vorgelegewelle realisierbar. Die Antriebswelle ist über eine Kupplungsvorrichtung mit dem Motor verbunden, so daß sie beim Schaltvorgang kraftschlußmäßig von diesem abgekoppelt werden kann. Auf der Antriebswelle sitzt ein Antriebszahnrad, welches die Vorgelegewelle antreibt, welche wiederum mit weiteren Zahnrädern drehfest verbunden ist. Auf der Vorgelegewelle angeordnete Zahnräder sind wiederum mit Zahnrädern der Abtriebswelle in Eingriff bringbar. Je nach Wahl einer Gangstufe und damit eines solchen Zahnradpaares kann ein gewünschtes Übersetzungsverhältnis hergestellt werden.

Das vorgenannte Handschaltgetriebe besitzt einen hohen Wirkungsgrad, ein geringes Gewicht und ist durch seinen einfachen Aufbau relativ kostengünstig. Allerdings ist mit einem solchen Handschaltgetriebe kein Automatikmodus erreichbar. Ferner tritt bei jedem Schaltvorgang eine Lastunterbrechung zwischen Motor und Antriebsrädern auf, so daß die Motorkraft beispielsweise bei einem kontinuierlichen Beschleunigungsvorgang nicht fortwährend ausgenutzt werden kann. Insgesamt besitzt das Handschaltgetriebe einen relativ geringen Komfort. Darüber hinaus muß eine separate Anfahrkupplung zur Entkopplung des Getriebes mit dem Antriebsmotor vorgesehen werden.

Als herkömmliches Getriebe mit einem Automatikmodus ist - wie der Name schon sagt - ein Automatikgetriebe bekannt. Ein herkömmliches Automatikgetriebe besitzt antriebswellenseitig meist einen Strömungswandler der als Anfahrkupplung dient und im Wandlungsbereich Drehmomentverstärkungen bewirkt. Dem Wandler nachgeschaltet sind meist Kombinationen von mehreren Planetengetrieben, welche je nach Feststellung von einzelnen Zahnrädern oder Zahnrädergruppen eine Drehmoment- und Drehzahlwandlung sowie eine mögliche Umkehrung des Drehsinns für einen Rückwärtsgang bewirken. Die Schaltvorgänge werden meist mittels einer elektrischhydraulischen Steuerung durchgeführt, die das selbsttätige Hoch- und Zurückschalten der einzelnen Gänge zum richtigen Zeitpunkt bewerkstelligen.

Das Automatikgetriebe weist relativ hohe Verluste auf und es bedarf einer aufwendigen Konstruktion. Insgesamt ist ein solches Getriebe kostenintensiv, besitzt ein hohes Gewicht und bedarf einer aufwendigen Steuerung.

Die gleichen Nachteile treffen auch auf ein Automatikgetriebe mit integrierter Anfahrkupplung zu. Bei einem solchen Getriebe können lediglich die Verluste etwas gesenkt werden.

Eine weitere Alternative für ein Wechselgetriebe ist durch ein Handschaltgetriebe mit automatisierter Schaltung angeboten. Bei einem solchen, ähnlich dem vorbeschriebenen Handschaltgetriebe aufgebauten Getriebe werden sämtliche Kupplungs- und Schaltvorgänge je nach Fahrerwunsch vollautomatisch durchgeführt. Mit dieser Maßnahme kann zwar ein Automatikmodus erreicht werden, allerdings läßt sich auch bei diesem Getriebe eine Lastunterbrechung beim Schalten nicht verhindern. Im übrigen ist bei einer automatisierten Schaltung ein hoher Steueraufwand, insbesondere bei der Motorsteuerung erforderlich. Ferner bedarf es einer Anfahrkupplung mit ebenfalls automatisierter Ansteuerung.

Eine weitere Möglichkeit für ein Wechselgetriebe ist durch ein stufenloses Automatikgetriebe mit Übertragungsriemen oder Schubgliederband gegeben. Bei einem solchen Getriebe ist auf der Antriebswelle meist ein Planetengetriebe mit Vorwärtsgang und Rückwärtsgang sowie Lamellenkupplung und einer stufenlos verstellbaren Primärkegelscheibe vorgesehen. Die Kraftübertragung zu einer Sekundärkegelscheibe auf der Abtriebswelle erfolgt beispielsweise über ein Stahlschub-Gliederband. Durch axiale Verschiebung je einer diagonal gegenüberliegenden Scheibenhälfte der Kegelscheiben werden die wirksamen Hebelarme größer bzw. kleiner, und entsprechend der Wahl des Verhältnisses der Hebelarme r1 zu r2 läßt sich das Übersetzungsverhältnis wählen.

Mit einem solchen Getriebe können jedoch nur kleinere Leistungen übertragen werden. Für die Übertragung von großen Drehmomenten ist ein solches Getriebe nicht geeignet.

Schließlich ist ein Doppelkupplungsgetriebe bekannt, bei dem zwei Kupplungen auf eine zweigeteilte Antriebswelle mit Festrädern wirken. Die eine Halbwelle ist hohl und umschließt etwa zur Hälfte die zweite. Losräder stekken auf der Abtriebswelle und werden mit dieser über mechanische Schaltmuffen verbunden. Um die Fahrstufen wechseln zu können, muß die eine Kupplung gelöst und die andere gleichzeitig eingerückt werden, während sich der mechanischen Schaltvorgang innerhalb der Schlußphase beider Kupplungen vollzieht. Die Doppelkupplung wirkt auch als Anfahrkupplung.

Nachteilig bei einem solchen Doppelkupplungsgetriebe ist die Verwendung von zwei Kupplungen, die jeweils so ausgelegt sein müssen, daß sie auch ein maximal anliegendes Drehmoment übertragen können.

Aufgabe der Erfindung ist es, ein kostengünstiges Wechselgetriebe mit einem Automatikmodus anzugeben, welches hohe Drehmomente übertragen kann und eine vollständige Lastunterbrechung beim Schalt- oder Übersetzungsänderungsvorgang vermeidet.

Diese Aufgabe wird durch die im Anspruch 1 angegebenen Merkmale gelöst.

Demgemäß wird parallel - insbesondere im Sinne eines Kraftflusses - zu einer ersten Einrichtung, also im wesentlichen einem ersten Getriebe, zwischen der Antriebs- und der Abtriebswelle zusätzlich eine zweite drehmomentübertragende Einrichtung zwischengeschaltet, mit der ein stufenlos wählbares Drehmoment im Bereich von Null bis zum maximal anliegenden Drehmoment zwischen diesen beiden Wellen übertragbar ist. Die Drehmomentstärke kann steuer- oder regelbar sein.

Da sowohl bei der ersten wie auch bei der zweiten Einrichtung, die erfindungsgemäß ein Umlaufgetriebe umfaßt, eine Kraftflußunterbrechung zwischen Antriebs- und Abtriebswelle möglich ist, muß keine separate Kupplung mehr zwischen einem Antriebsmotor und dem Getriebe selbst vorgesehen werden. Die Kupplung ist bereits im Wechselgetriebe integriert. Bei entsprechender Auslegung müssen auch keine Wartungsarbeiten durchgeführt werden. Diese "integrierte Kupplung" ist kostensparend, führt zu einem geringeren Platzbedarf der Getriebe-Motoreinheit und verringert den Konstruktions- sowie den Wartungs- und Reparaturaufwand.

Ein wesentlicher Punkt der Erfindung liegt darin, durch eine geeignete Ansteuerung der zweiten Einrichtung eine solche Drehmomentübertragung von der Antriebs- auf die Abtriebswelle oder umgekehrt durchzuführen, daß durch die erste Einheit kein Drehmoment mehr übertragen wird und das Übersetzungsverhältnis bei dieser ersten Einheit problemlos geändert werden kann; beispielsweise indem ein schaltbares, gerade in Eingriff mit einer Welle oder einem anderen Zahnrad zu bringendes oder außer Eingriff zu bringendes Stirnrad kräftefrei geschaltet werden kann. Da somit auch beim Schaltvorgang der ersten Einrichtung ein Kraft- oder Drehmomentschluß über die zweite drehmomentübertragende Einrichtung zwischen Antriebs- und Abtriebswelle aufrechterhalten werden kann, wird eine vollständige Lastunterbrechung - beispielsweise zwischen einem Antriebsmotor und Antriebsrädern - wirkungsvoll verhindert. Bei geeigneter Steuerung der zweiten Einrichtung kann ein Lastabfall sehr klein gehalten werden. Der Fahrer bekommt dann auch beim Schaltvorgang den Eindruck, daß das Fahrzeug kontinuierlich beschleunigt oder verzögert wird. Ein durch unterschiedliche Beschleunigungen entstehender "Ruckeffekt" kann vermieden werden.

Bei dem erfindungsgemäßen Wechselgetriebe kann in einfacher Weise die Funktion eines "Hillholders" realisiert werden. Ein Hillholder bietet die Möglichkeit, ohne Bremsbetätigung am Hang oder Berg stehenzubleiben und durch einfache Fahrpedalbetätigung einen Anfahrvorgang ohne Rückrollgefahr zu erreichen. Schließlich kann der Steueraufwand, insbesondere der Steueraufwand bei einer digitalen Motorelektronik, gering gehalten werden.

Darüber hinaus können Hochschaltungen ohne oder mit nur geringen Sperrzeiten und Rückschaltungen während einer gerade durchzuführenden Hoch- oder Rückschaltung durchgeführt werden. Es ist also bei Rückschaltungen nicht notwendig die Durchführung eines vorhergehend gewählten Schaltvorganges abzuwarten. Eine Schaltanforderung kann über Schaltkennlinien, berechnete Schaltsignale oder eine sequentielle Anforderungseinheit mitgeteilt werden.

Schließlich eignet sich das vorliegenden erfindungsgemäße Wechselgetriebe auch zum Einbau in sportliche Fahrzeuge mit besonders hoher Motorleistung.

Weitere Ausführungsformen sowie Vorteile und Merkmale sind in den Unteransprüchen angegeben.

Eine besonders einfache Möglichkeit eine stufenlose Drehmomentübertragung von der Antriebs- auf die Abtriebswelle und umgekehrt durchzuführen, bietet sich durch den Einsatz einer auf Reibschluß basierenden Wirkungseinheit, beispielsweise einer Kupplung oder Bremseinheit. Eine Kupplung muß in einem Schlupfbetrieb arbeiten können und derart ansteuerbar sein, daß entsprechend dem gewählten Kupplungsdruck und der daraus resultierende Schlupfwirkung ein gewünschtes Drehmoment exakt dosierbar übertragbar ist.

Eine besonders bevorzugte Ausführungsform ist dadurch gekennzeichnet, daß die erste Einrichtung durch ein einfaches Schaltgetriebe realisiert ist. In diesem Fall kann man sich der besonderen Vorteile eines Schaltgetriebes, nämlich dessen einfacher Aufbau, hoher Wirkungsgrad, Kompaktheit und hohe Kraftübertragungsfähigkeit, bedienen.

Als besonders geeignetes weiteres Getriebe in der drehmomentübertragenden Einrichtung in Form eines Umlaufgetriebes dient vorzugsweise ein Planetengetriebe. Bei einem Planetengetriebe können in kompakter Weise verschiedene Übersetzungsverhältnisse auf einfache Art und Weise erreicht werden. Darüber hinaus ist es möglich, ohne weiteres eine Drehrichtungsumkehr für einen Rückwärtsgang zu realisieren.

Vorzugsweise greift die Kupplung am Hohlrad des Planetengetriebes an.

Gemäß einer vorzugsweisen Ausführungsform kann das Hohlrad mittels einer Arretiervorrichtung oder Kupplung gegenüber einem Getriebegehäuse festgestellt werden. Dadurch wird eine erste Übersetzungsmöglichkeit, beispielsweise eine erste Gangstufe erreicht. Diese Übersetzungsstufe braucht dann nicht mehr durch die erste Einrichtung, beispielsweise das Schaltgetriebe, realisiert zu werden.

Ferner ist es möglich den Planetenträger, der im Normalbetrieb mit der Abtriebswelle gekoppelt sein kann, von dieser zu entkoppeln, beispielsweise durch eine axiale Verschiebung derselben. Bei gleichzeitiger Arretierung des Planetengetriebes ist so ein Rückwärtsgang schaltbar. Dabei ist beispielsweise das Hohlrad über die Kupplung mit der Abtriebswelle gekoppelt. Natürlich sind für eine Rückwärtsgangfunktion auch andere konstruktive Lösungen denkbar.

Gemäß einer bevorzugten Ausführungsform ist das Sonnenrad mit der Antriebswelle und der Planetenradträger mit der Abtriebswelle gekoppelt oder koppelbar. Auch die genau umgekehrte Konstruktionslösung ist je nach Anwendungsfall denkbar.

Gemäß einer weiteren bevorzugten Ausführungsform wird die zweite Einrichtung, insbesondere die Kupplung, von einer Steuerung beaufschlagt, die derart ausgebildet ist, daß die Ansteuerung, insbesondere die Druckregulierung für die Kupplung, in Abhängigkeit von Motordrehzahl und/oder Antriebsdrehzahl und/oder eingelegtem/angefordertem Gang und/oder Antriebsdrehzahlgradient und/oder Abtriebsdrehzahlgradient steuerbar ist. Wird eine Kupplung verwendet, so ist diese von dem vollständig ausgekuppelten bis zum vollständig eingekuppelten Zustand stufenlos ansteuerbar, wobei in einem solchen Zwischenzustand ein Kupplungsschlupf stattfindet.

Die Kupplung kann als Lamellenkupplung ausgeführt sein. Sie ist einerseits mittel- oder unmittelbar mit der Antriebs- oder Abtriebswelle oder den darauf angeordneten schaltbaren Stirnrädern oder dem Getriebegehäuse und andererseits mit einem Planetengetriebeelemente (Sonnenrad, Planetenradträger, Hohlrad) verbunden, wobei dann die zu diesem Planetengetriebeelement zugehörige Welle keine direkte Verbindung zu der Antriebs- oder Abtriebswelle besitzt, welche wiederum mit der Kupplung mittel- oder unmittelbar verbunden ist.

Gemäß einer besonders bevorzugten Ausführungsform ist zwischen der Kupplung einerseits und der damit mittel- oder unmittelbar gekoppelten Antriebs- oder Abtriebswelle oder den daran angeordneten schaltbaren Stirnrädern andererseits eine Umschalteinrichtung vorgesehen, die eine steuerbare Kopplung zwischen dem Planetengetriebe einerseits und wahlweise der Antriebs- oder Abtriebswelle, den daran angeordneten schaltbaren Stirnrädern oder dem Getriebegehäuse andererseits ermöglicht.

Die Umschalteinrichtung kann beispielsweise als axial verschiebbare Buchse, Kupplungsnabe oder dergleichen ausgeführt sein, welche Organe aufweist, die mit dem Getriebegehäuse, einem Teil eines schaltbaren Stirnrades oder der Abtrieb- oder Antriebswelle lösbar drehfest verbindbar sind.

Ferner können zwischen dieser Umschalteinrichtung, insbesondere der verschiebbaren Buchse, Kupplungsnabe oder dergleichen und den damit verbindbaren An- oder Abtriebswellen, Stirnrädern und dergleichen Synchronisiereinrichtungen vorgesehen sein.

Eine Verbindung zwischen der Umschalteinrichtung und einem schaltbaren, auf der An- oder Abtriebswelle angeordneten Stirnrad ist insbesondere dann auf einfache Weise zu realisieren, wenn das Stirnrad eine Hohlwelle aufweist, durch die hindurch sich die An- oder Abtriebswelle erstreckt.

Von Vorteil ist auch eine Direktkoppeleinrichtung zwischen An- und Abtriebswelle, da dadurch ein Direktgang schaltbar ist mit dem jegliche Übertragungsverlust vermieden werden können.

insbesondere kann die Kupplung der drehmomentübertragenden Einrichtung und/oder die Umschaltvorrichtung elektromechanisch und/oder hydraulisch und/oder pneumatisch betätigbar sein.

Weitere Vorteile und Merkmale sowie vorteilhafte Ausführungsformen sind den Unteransprüchen zu entnehmen.

Die Erfindung wird nachfolgend auch im Hinblick auf weitere Vorteile und Merkmale anhand von Ausführungsbeispielen und mit Bezug auf die beiliegenden Zeichnungen näher erläutert. Die Zeichnungen zeigen in
- Figur 1: eine stark schematische Schnittdarstellung einer einfachen Ausführungsform eines erfindungsgemäßen Wechselgetriebes,
- Figur 2: eine stark schematische Schnittdarstellung einer zweiten Ausführungsform eines erfindungsgemäßen Wechselgetriebes,
- Figuren 3a bis 3h: jeweils gleiche Schnittdarstellungen des Wechselgetriebes wie in Figur 2, wobei je nach Schaltvorgang oder eingelegtem Übersetzungsverhältnis mit dicker Linie der Kraftfluß dargestellt ist,
- Figur 4: ein Diagramm, unter anderem mit Drehzahl- und Drehmomentverläufen bei einer kontinuierlichen Beschleunigung bei einem erfindungsgemäßen Wechselgetriebe und
- Figur 5: ein Diagramm wie Figur 4 bei einer kontinuierlichen Beschleunigung mittels eines Handschaltgetriebes.

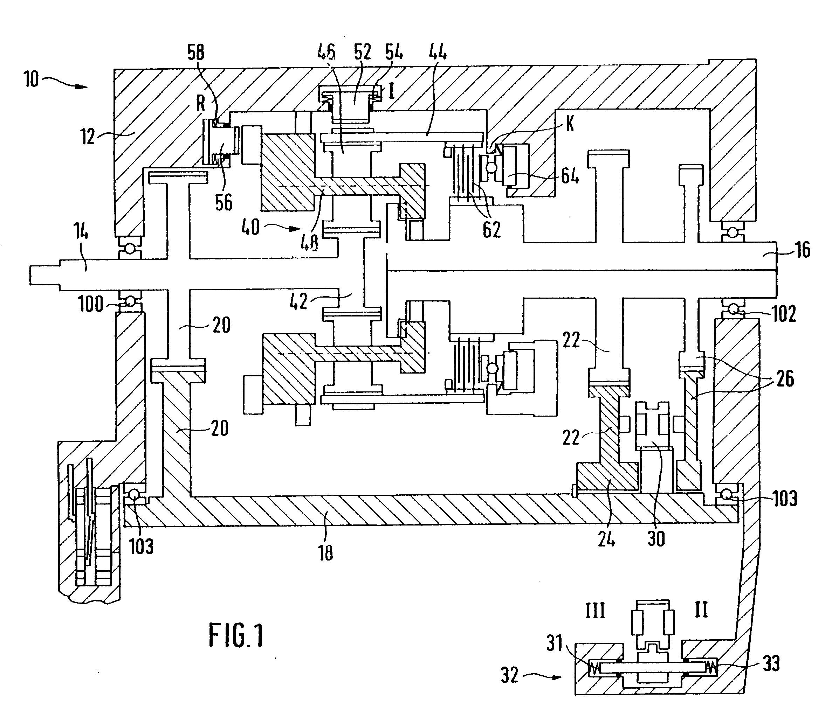

Eine einfache Ausführungsform eines erfindungsgemäßen Wechselgetriebes ist in Figur 1 dargestellt.

In einem Getriebegehäuse 12 sind koaxial ausgerichtet eine von einem Antriebsmotor (nicht dargestellt) kommende Antriebswelle 14 und eine zu den Antriebsrädern führende Abtriebswelle 16 angeordnet. Die Antriebswelle 14 sowie die Abtriebswelle 16 sind mittels Lagerungen 100 bzw. 102 im Getriebegehäuse 12 drehbar gehalten.

Parallel zu der Antriebs- 14 und Abtriebswelle 16 ist eine Vorgelegewelle 18 angeordnet, welche - zusammen mit den darauf angeordneten Stirnrädern - lediglich in einem halben Schnitt dargestellt ist. Die Vorgelegewelle 18 ist mittels zwei endseitiger Lager 103 drehbar im Getriebegehäuse 12 gehalten.

Eine Kraftübertragung zwischen der Antriebswelle 14 und der Vorgelegewelle 18 erfolgt über ein Antriebsstirnradpaar 20, deren einzelne Stirnräder jeweils fest auf der zugeordneten Welle, also Antriebswelle 14 und Vorgelegewelle 18, befestigt sind.

Eine Kraftübertragung zwischen der Vorgelegewelle 18 und der Abtriebswelle 16 findet über - im vorliegenden Beispiel - zwei Stirnradpaare 22 und 26 statt, von denen jeweils ein Stirnrad, im vorliegenden Fall die auf der Vorgelegewelle 18 angeordneten Stirnräder 24 und 28, schaltbar, also mit der jeweiligen Welle verbind- und lösbar sind.

Zur Koppelung und Verbindung der schaltbaren Stirnräder 24 und 28 mit der Vorgelegewelle 18 ist eine Schaltvorrichtung 32 vorgesehen, welche über Schaltzylinder 31 und 33 eine Schaltmuffe 30 in Axialrichtung der Vorgelegewelle 18 verschieben kann, so daß wahlweise das Stirnrad 24, das Stirnrad 26 oder keines dieser Stirnräder mit der Vorgelegewelle 18 verbindbar ist.

Gemäß der schematischen Darstellung in Fig. 1 kommen beim Eingriff eines Stirnrades 24 oder 28 mit der Schaltmuffe 30 jeweils Zapfen eines Stirnrades mit Ausnehmungen der Schaltmuffe 30 in Eingriff. Auf die tatsächliche praktische Realisierung wird jedoch nicht näher eingegangen, da dies nicht Thema der vorliegenden Erfindung ist. Wichtig ist vorliegend lediglich, daß ein jeweiliges Stirnrad mit einer Welle in geeigneter Weise zu verschalten ist.

Die obengenannte Axialverschiebung der Schaltmuffe 30 wird durch hydraulische Betätigung der Schaltzylinder 31 und 33 erreicht, wobei bei einem Schaltvorgang kein wesentliches Dreh- oder Kraftmoment zwischen der Vorgelegewelle 18 und dem jeweils mit dieser verbundenen bzw. mit dieser zu verbindenden Stirnrad 24, 28 auftreten soll.

Die zu den schaltbaren Stirnrädern 24 und 28 komplementären Stirnräder der Stirnradpaare 22 und 26 sind jeweils auf der Abtriebswelle 16 fest angeordnet.

Zentral in Figur 1 ist eine drehmomentübertragende Einrichtung vorgesehen, welche - wie nachfolgend erläutert wird - ein gewünschtes, stufenlos wählbares Drehmoment von der Antriebswelle 14 zur Abtriebswelle 16 oder umgekehrt übertragen kann.

Die drehmomentübertragende Einrichtung umfaßt im vorliegenden Ausführungsbeispiel ein Planetengetriebe 40 und eine Kupplung K.

Auch andere drehmomentübertragende Einrichtungen sind durchaus denkbar. Dabei muß jedoch eine Einrichtung vorgesehen sein, die den Kraftfluß zwischen Antriebswelle und Abtriebswelle unterbrechen und eine Drehmomentübertragung dosiert vornehmen kann.

Ein Sonnenrad 42 des Planetengetriebes 40 ist am Ende der Antriebswelle 14 ausgebildet. Dieses Sonnenrad 42 steht mit Planetenrädern 46 des Planetengetriebes in Eingriff. Die Planetenräder 46 sind an einem in dessen Axialrichtung geringfügig verschiebbaren Planetenträger 48 gehalten. Im Normalzustand ist der Planetenträger 48 mit der Abtriebswelle 16 gekoppelt, so daß sich bei Rotation des Planetenträgers 48 auch die Abtriebswelle 16 und umgekehrt mitbewegt. Die Planetenräder rollen auf einem Hohlrad 44 des Planetengetriebes 40 ab.

Das Hohlrad 44 ist über die Ebene des Planetengetriebes 40 hinaus in Richtung der Abtriebswelle verlängert. An diesem Ende sind radial nach innen ein Teil von Lamellen 62 einer Lamellenkupplung K angeordnet. Die komplementären Lamellen 62 sind bei der vorliegenden Ausführungsform unmittelbar an der Abtriebswelle 16 angeordnet.

Durch eine Kopplung der Lamellen 62 wird eine Verbindung zwischen dem Hohlrad 44 und der Antriebswelle 16 hergestellt werden. Die Kopplung und damit die Kupplungsbetätigung wird mittels eines Kupplungszylinders 64 erreicht. Wesentlich ist hierbei, daß der Kupplungszylinder 64 präzise gesteuert werden kann, so daß die Kupplung je nach Drehmomentübertragungsanforderung in einem entsprechenden Schupf- oder Schleifbetrieb gehalten wird. Damit ist eine genau dosierte Drehmomentübertragung zunächst zwischen dem Hohlrad 44 und der Abtriebswelle 16 möglich.

Die Steuerung des Kupplungszylinders geschieht beim vorliegenden Beispiel hydraulisch. Es sind aber auch andere Steuerungsarten denkbar.

Alternativ kann zwischen dem Hohlrad 44 und der Abtriebswelle 16 eine andere Kupplung als die vorliegende Lamellenkupplung K verwendet werden. Bei der Wahl der Kopplung ist allerdings die Fähigkeit zu beachten, das Drehmoment genau dosiert zu übertragen und auch noch ein hohe Drehmomentübertragung sicherzustellen.

Die Druckregulierung für die Kupplung oder die sonstige Beaufschlagung bei anderen Kupplungen erfolgt durch eine nicht dargestellte Steuerung, welche in Abhängigkeit von Motorbetriebsbedingungen beispielsweise von der Motordrehzahl, der Antriebsdrehzahl, dem eingelegten bzw. angeforderten Gang oder dem An- oder Abtriebsdrehzahlgradienten eine erforderliche Kupplungsbetätigung bewirkt.

Radial außerhalb des Planetengetriebes 40 ist im Getriebegehäuse 12 eine Arretiervorrichtung 52 vorgesehen, welche mittels Betätigung eines ersten Schaltzylinders 54 radial nach innen, also gegen das Hohlrad 44 des Planetengetriebes 40 beaufschlagt werden kann, um dieses gegenüber dem Getriebegehäuse 12 festzusetzen.

Ferner ist - im vorliegenden Beispiel im wesentlichen in Axialrichtung des Planetengetriebes 40 - eine zweite Arretiervorrichtung 56 im Getriebegehäuse 12 angeordnet, welche durch Betätigen eines zweiten Schaltzylinders 58 den Planetenträger in dessen Axialrichtung verschiebt und zum Getriebegehäuse 12 blockiert.

Im folgenden soll bei dem Wechselgetriebe gemäß der Fig. 1 der Kraftschluß und die Drehmomentübertragung beschrieben werden:

Bei einem stehenden Fahrzeug und dem Leerlauf des Motors treibt die Antriebswelle 14 zwar über das Stirnradpaar 20 die Vorgelegewelle 18 an. Jedoch sind beide Stirnräder 24 und 28 von der Vorgelegewelle 18 entkoppelt, so daß über die Stirnradpaare 22 und 26 keine Kraft auf die Abtriebswelle 16 übertragen wird. Ferner ist die Kupplung K ausgekoppelt, so daß kein Kraftschluß zwischen dem Planetengetriebe 40 und der Abtriebswelle 16 besteht. Das Planetengetriebe 40 läuft frei mit.

Bei eingelegtem ersten Gang ist das Hohlrad 44 des Planetengetriebes 40 durch Betätigen des ersten Schaltzylinders 54 und dadurch Betrieb der Arretiervorrichtung 52 gegenüber dem Getriebegehäuse 12 festgelegt. Damit treibt die Antriebswelle über das Sonnenrad 42 die Planetenräder 46. Durch den sich gleichsinnig mit den Sonnenrad bewegenden, mit der Abtriebswelle 16 gekoppelten Planetenträger 48 wird dann die erste Übersetzungsstufe (Gangstufe) realisiert. Zur Kennzeichnung dieser ersten Gangstufe ist in Fig. 1 bei der Arretiervorrichtung 52 die Ziffer I dargestellt. Sie soll angeben, daß der erste Gang durch Betätigen der Arretiervorrichtung 52 erreicht werden kann.

Beim zweiten und dritten Gang bzw. den entsprechenden Übersetzungsstufen wird je nach Gangwahl das Stirnradpaar 22 oder 26 drehmomentübertragend; d. h., das entsprechend zugeordnete schaltbare Stirnrad 24 oder 28 ist dann mit der Vorgelegewelle 18 über die Schaltmuffe 30 verbunden. Bei einem vollständig eingelegtem Gang - also nicht bei einem Schaltvorgang - ist die Kupplung K jeweils entkoppelt und überträgt kein Drehmoment.

Der vierte Gang schließlich ist über eine direkte Kopplung der Antriebswelle 14 und der Abtriebswelle 16 zu erreichen. Dies wird beim vorliegenden Beispiel dadurch erreicht, daß die Kupplung K ohne Schlupf betrieben wird (vollständige Kopplung). Da der Planetenradträger mit der Abtriebswelle in Eingriff steht und auch eine vollständige Kopplung von Hohlrad 44 und Abtriebswelle 16 besteht, ist der Planetenradträger 48 relativ zur Hohlwelle 44 feststehend. Die Planetenräder 46 können nicht auf dem Hohlrad 44 abrollen. Der gesamte Planetenradsatz dreht sich damit mit der Umdrehungsgeschwindigkeit des Motors (Direktgang).

Bei den jeweiligen Schaltvorgängen zwischen den einzelnen, vorgenannten Übersetzungsverhältnissen wird die Kupplung meist im Schlupf betrieben, und zwar in der Weise, daß jeweils eine gesteuerte, genau dosierte Drehmomentübertragung zwischen dem Hohlrad 44 und der Abtriebswelle 16 durchgeführt wird. Je nach Arretierung oder Verschaltung der Planetengetrieberäder 42, 44, 46 werden Drehmomente zwischen der Vorgelegewelle 18 und den schaltbaren bzw. zu schaltenden Stirnrädern 24 und 28 zu Null, so daß diese einwandfrei mit der Vorgelegewelle 18 ge- oder entkoppelt werden können.

Der Rückwärtsgang wird beim vorliegenden Wechselgetriebe gemäß Fig. 1 dadurch realisiert, daß der Planetenradträger von der Abtriebswelle 16 entkoppelt und gegenüber dem Getriebegehäuse 12 festgesetzt (Aktivierung der Arretiervorrichtung 56 durch Schaltzylinder 58), das Hohlrad 44 dagegen über die Kupplung K gekoppelt wird. Dadurch ergibt sich eine gegenläufige Drehbewegung des Hohlrads 44 und damit der Abtriebswelle 16 gegenüber der Antriebswelle 14 mit einem bestimmten Übersetzungsverhältnis.

Beim Anfahrvorgang ist zunächst die Umdrehungszahl der Abtriebswelle 0, genauso wie die Umdrehungszahl des mit der Abtriebswelle 16 verbundenen Planetenradträgers 48. Die Antriebswelle 14 dreht sich entsprechend der Motorumdrehung. Das Hohlrad 44 dreht sich gegensinnig. Wird nun eine gesteuerte und zunehmende Kupplungsbetätigung durchgeführt, so wird das sich zunächst im Gegensinn zur Antriebswelle drehende Hohlrad 44 abgebremst. Dadurch wird ein Drehmoment von dem Planetenradträger 48 zur Abtriebswelle 16 übertragen und die Abtriebswelle 16 dreht sich zunehmend schneller. Die Kupplung K wird geschlossen, bis das Hohlrad 44 relativ zum Gehäuse 12 steht. In diesem Zustand wird der erste Schaltzylinder 54 betätigt, wodurch eine Feststellung des Hohlrads 44 mit dem Getriebegehäuse 12 erfolgt. Die Kupplung K kann dann wieder gelöst werden. Der Planetenträger 48 und die damit verbundene Abtriebswelle 16 drehen sich dann gemäß einem ersten Übersetzungsverhältnis, was dem ersten Gang entspricht.

Insgesamt ist auf diese Weise auch eine Anfahrkupplung realisiert, so daß auf eine separate Kupplung zwischen dem Antriebsmotor und dem Getriebe verzichtet werden kann.

Bei einem weiteren Schaltvorgang vom ersten zum zweiten Gang wird zunächst die Feststellung zwischen dem Hohlrad 44 und dem Gehäuse 12 über die Arretiervorrichtung 52 gelöst, wobei die Kupplung K derart betätigt wird, daß kein Moment mehr zwischen dem Hohlrad 44 und der Arretiervorrichtung 52 anliegt.

Anschließend wird die Kupplung K weiterbetätigt, um eine Drehmomentübertragung in der Weise zu erreichen, daß die Umdrehungszahl von Abtriebswelle 16 und Vorgelegewelle 18 zur drehmomentlosen und kräftefreien Verbindung des Stirnrades 24 mit der Vorgelegewelle 18 über die Schaltmuffe 30 angeglichen werden. Die Koppelung zwischen Vorgelegewelle 18 und Stirnrad 24 findet durch entsprechende Betätigung des Schaltzylinder 33 und damit Axialverschiebung der Schaltmuffe 30 statt.

Die Ziffern II und III bezeichnen jeweils den zu betätigenden Schaltzylinder 31 bzw. 33. Die Schaltmuffe 30 bewegt sich je nach betätigtem Schaltzylinder gerade in entgegengesetzter Richtung.

Die Steuerung kann dabei auf die Fahrzeugzustände, insbesondere auf die Motordrehzahl, die Abtriebsdrehzahl, den eingelegten bzw. angeforderten Gang und den An- oder Abtriebsdrehzahlgradienten reagieren. Die Steueranforderungen können in einem Kennlinienverlauf oder in entsprechenden Tabellen abgelegt sein. Alternativ können sie auch ständig aktuell berechnet werden.

Ist eine Schaltung des Stirnrades 24 erfolgt, so daß der Kraftfluß nunmehr über das Stirnradpaar 22 von der Antriebswelle 14 zur Abtriebswelle 16 durchgeführt werden kann, so wird die Kupplung K wieder gelöst.

Bei einem nächsten Schaltvorgang in den dritten Gang wird die Kupplung K zunächst wieder in der Weise betätigt, daß durch eine entsprechende Kraftübertragung von Antriebswelle 14 auf Abtriebswelle 16 über das Planetengetriebe und die Kupplung das Stirnrad 24 drehmoment- und kräftefrei gegenüber der Vorgelegewelle 18 geschaltet ist. In diesem Zustand wird eine Entkoppelung des Stirnrades 24 vorgenommen. Daraufhin wird die Kupplung K weiter betätigt, bis eine entsprechende Drehzahlangleichung zwischen Vorgelegewelle 18 und Abtriebswelle 16 in der Weise stattgefunden hat, daß das Stirnrad 28 drehmomentfrei mit der Vorgelegewelle 18 gekoppelt werden kann. Ist eine Kopplung über die Betätigung des Schaltzylinders 33 erfolgt und damit eine Drehmomentverbindung von der Antriebswelle 14 über die Vorgelegewelle 18 zur Abtriebswelle 16 hergestellt, so wird die Kupplung K wieder gelöst.

Der Schaltvorgang in den vierten Gang gestaltet sich in entsprechender Weise, indem zunächst die Kupplung K wieder in der Weise betätigt wird, daß das Stirnrad 28 gegenüber der Vorgelegewelle 18 kräftefrei geschaltet wird. Nach Entkoppeln des Stirnrades 28 mit der Vorgelegewelle 18 wird die Kupplung weiter in der Weise betätigt, daß das Hohlrad 44 gegenüber der Abtriebswelle 16 festgestellt ist. Durch den fortwährenden Eingriff des Planetenradträgers 48 mit der Abtriebswelle 16 wird damit insgesamt eine Verblockung von Sonnenrad, Hohlrad und Planetenrad erreicht, so daß eine Direktschaltung zwischen Antriebswelle 14 und Abtriebswelle 16 erreicht ist. Die Abtriebswelle 16 dreht sich in diesem Fall drehzahlgleich mit der Antriebswelle 14.

Die Rückschaltvorgänge zwischen den Gängen 4, 3, 2 und 1 sowie dem Leerlauf gestalten sich in genau umgekehrter Reihenfolge.

Bei dem Einlegen des Rückwärtsganges wird der ansonsten mit der Abtriebswelle 16 gekoppelte Planetenradträger 48 von dieser entkoppelt und gegenüber dem Getriebegehäuse festgestellt. Anschließend wird die Kupplung K betätigt, so daß das gegensinnig zur Antriebswelle 14 umlaufende Hohlrad die Abtriebswelle 16 ebenfalls gegensinnig dazu antreibt.

Unter anderem ist bei dem Wechselgetriebe gemäß Fig. 1 wesentlich, daß durch eine Kopplung des Hohlrades 44 über die Kupplung K, mit der Abtriebswelle 16 eine Verschaltung von Hohlrad 44 und Planetenradträger 48 stattfinden kann, so daß eine Drehzahl- und Drehmomentangleichung zwischen der Antriebswelle 14 und der Abtriebswelle 16 sowie der Vorgelegewelle 18 und den darauf angeordneten schaltbaren Stirnrädern 24 und 28 stattfinden kann.

Insgesamt ist mit diesem einfachen Wechselgetriebe ein unsynchronisiertes Stufengetriebe mit Vorgelegewelle angegeben, bei dem der höchste Gang als Direktgang ausgeführt ist. Zwischen dem Antriebs- und der Abtriebswelle ist ein Koppel- oder Umlaufgetriebe integriert, welches über eine Kupplung beim Anfahren und Schalten eine Drehzahlangleichung unter Vermeidung einer vollständigen Lastunterbrechung vornimmt.

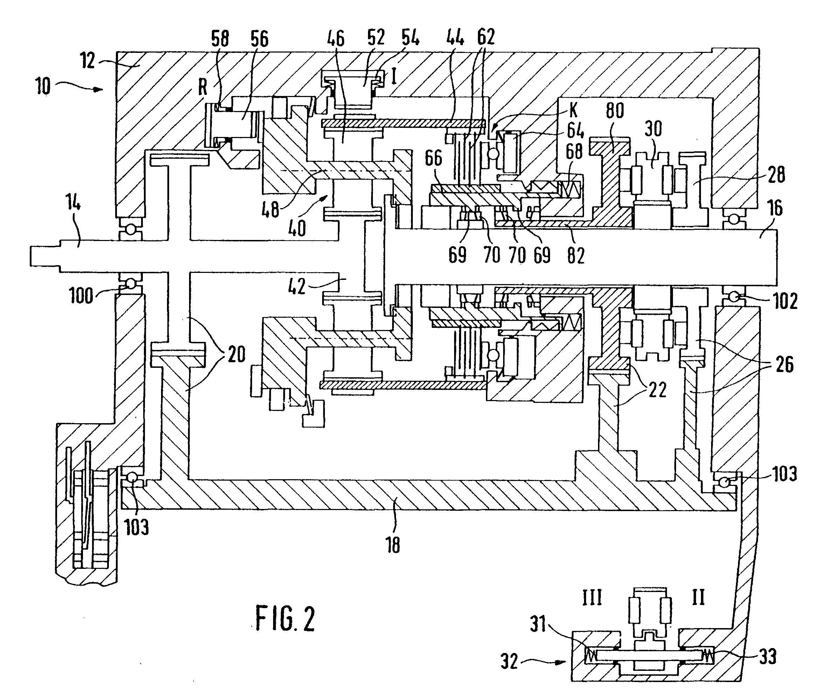

In Fig. 2 ist eine weitere Ausführungsform eines Wechselgetriebes dargestellt, das gegenüber der in Fig. 1 gezeigten Ausführungsform leicht modifiziert wurde. Nachfolgend wird auf diese Unterschiede eingegangen. Die gleichen Bezugsziffern bezeichnen gleiche oder entsprechende Teile oder Merkmale.

Der wesentliche Unterschied des Wechselgetriebes gemäß Fig. 2 gegenüber demjenigen in Fig. 1 besteht darin, daß zwischen der Kupplung K und der Abtriebswelle eine Umschaltvorrichtung vorgesehen ist.

Bei dieser Umschaltvorrichtung handelt es sich im wesentlichen um eine auf der Abtriebswelle 16 gelagerten und in Axialrichtung derselben verschiebbaren Kupplungsnabe 66, auf der - im Gegensatz zur Anordnung in Fig. 1 - radial außerhalb ein Teil der Lamellen 62 der Kupplung K vorgesehen sind und die über die Kupplung mit dem Hohlrad 44 des Planetengetriebes 40 verbunden werden kann.

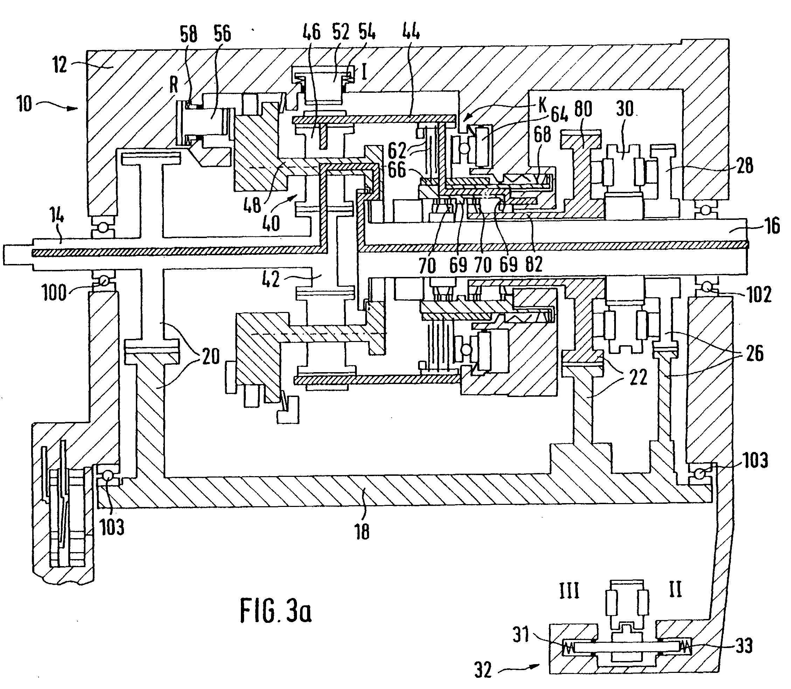

Die im wesentlichen zylindrisch ausgeführte Kupplungsnabe 66 ist an ihrem einen Ende in einem Nabenzylinder 68 aufgenommen. Durch Betätigung des Nabenzylinders 68 kann die Kupplungsnabe 66 in Axialrichtung der Antriebswelle verschoben werden. Auf ihrer radial inneren Seite weist die Kupplungsnabe 66 verschiedene Nabennasen 69 auf, welche, wie nachfolgend noch erläutert wird, mit dem Getriebehäuse 12, einem schaltbaren Stirnrad 80 oder der Antriebswelle 16 in Verbindung gebracht werden können. Die Nabennasen 69 sind in Fig. 2 bzw. den Fig. 3a bis 3h lediglich schematisch dargestellt, genauso wie die entsprechend komplementär ausgebildeten Eingriffsvorrichtungen auf der Antriebswelle 16, dem Stirnrad 80 oder dem Gehäuse 12.

In gleicher Weise schematisch dargestellt sind zwischen der Nabenkupplung 66 und den entsprechenden Teilen angeordnete Synchronisierringe 70, auf die nicht gesondert eingegangen werden soll, weil deren Aufbau allgemein bekannt ist.

Eine weitere Modifizierung des Wechselgetriebes gegenüber der Ausführungsform in Fig. 1 ist dadurch gekennzeichnet, daß die schaltbaren Stirnräder der Stirnradpaare 22 und 26 auf der Abtriebswelle 16 vorgesehen sind und zwar in Form der Stirnräder 28 und 80.

Das Stirnrad 80 besitzt eine Hohlwelle 82, durch welche die Antriebswelle 16 hindurchgeführt ist. Die Hohlwelle 82 erstreckt sich in Richtung der Kupplungsnabe 66, so daß bei einer entsprechenden Axialverschiebung der Kupplungsnabe 66 eine drehfeste Verbindung zwischen dieser und dem Stirnrad 80 hergestellt werden kann.

Entsprechend der Verschiebung der Kupplungsnabe 66 kann die Kupplung K wahlweise mit dem Getriebegehäuse 12, dem Stirnrad 80 oder der Abtriebswelle 16 verbunden werden.

Bezüglich der eingelegten Gangstufen wird auf die Beschreibung zum Wechselgetriebe gemäß Fig. 1 verwiesen. Nachfolgend wird anhand der Fig. 3a bis 3h der Kraftfluß bzw. Drehmomentverlauf bei den entsprechenden Schaltvorgängen beschrieben:

Zunächst, wenn das Fahrzeug sich im Stillstand befindet, ist die Umdrehungszahl der Abtriebswelle 16 Null. Der mit der Abtriebswelle 16 gekoppelte Planetenradträger 48 dreht sich ebenfalls nicht, so daß das Hohlrad 44 bei sich im Leerlauf drehendem Antriebsrad 14 gegensinnig zu diesem dreht.

Bei einem Anfahrvorgang wird zunächst die Kupplungsnabe 66 durch Betätigung des Nabenzylinders 68 in Axialrichtung - in Fig. 3a - nach rechts verschoben, wodurch sie mit dem Getriebegehäuse 12 drehfest in Eingriff kommt. Anschließend wird die Kupplung K kontinuierlich betätigt, bis sie vollständig geschlossen ist. Bei vollständiger Kopplung der Kupplung K ist das Hohlrad 44 gegenüber dem Getriebegehäuse 12 festgesetzt. Die erste Arretiervorrichtung 52 kann zur Entlastung der Kupplung K betätigt werden.

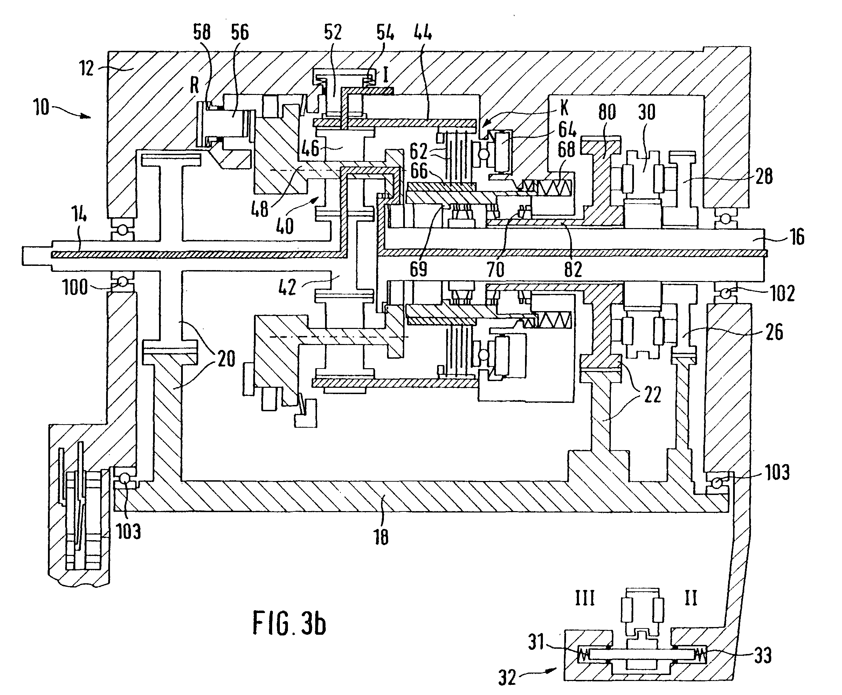

Während der. Kupplungsbetätigung ist ein Kraftfluß wie in Fig. 3a dargestellt, von der Hohlwelle 44 über die Kupplung K und die Kupplungsnabe 66 zum Gehäuse 12 vorhanden. Damit wird eine je nach Kupplungsbetätigung resultierende Drehmomentübertragung zwischen Antriebswelle 14 und Abtriebswelle 16 über den Planetenradträger 48 erreicht. Nach Beendigung des Schaltvorgangs, also wenn das Hohlrad 44 gegenüber dem Gehäuse 12 durch die erste Arretiervorrichtung 52 festgestellt ist, ist der erste Gang eingelegt, die Kupplung wird dann wieder gelöst. Dieser Zustand ist in Fig. 3b dargestellt, in der durch die dicke winkelförmige Linie der Kraftfluß von Hohlrad über Arretiervorrichtung 52 zum Getriebegehäuse 12 gezeigt ist.

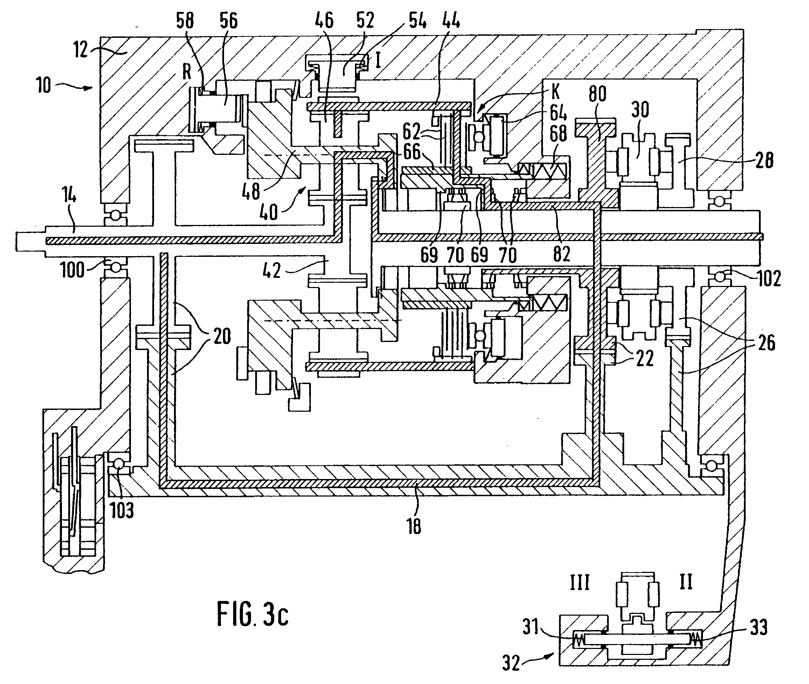

Beim nächsten Schaltvorgang (Fig. 3c), also von der Gangstufe 1 zur Gangstufe 2 wird zunächst die Kupplungsnabe 66 durch Beaufschlagung des Nabenzylinders 68 in der Weise verschoben, daß sie mit dem Stirnrad 80 gekoppelt ist. Durch Betätigung der Kupplung K läßt sich nunmehr ein Kraftfluß vom Hohlrad 44 über die Kupplung K, die Kupplungsnabe 66 zum Stirnrad 80 herstellen. Da dieses über das komplementäre Stirnrad des Zahnradpaares 22 und damit über die Vorgelegewelle 18 mit der Antriebswelle 14 verbunden ist, lassen sich nach Lösen der ersten Arretiervorrichtung 52 und Betätigen der Kupplung K die Umdrehungsgeschwindigkeiten von Antriebswelle 14 und Abtriebswelle 16 bzw. von Abtriebswelle 16 und der Vorgelegewelle 18 derart einstellen, daß das Stirnrad 80, bzw. bei einem Gangwechsel von 2 auf 3 das Stirnrad 28 kräftefrei mit der Antriebswelle 16 gekoppelt (bei einem anderen Schaltvorgang auch entkoppelt) werden kann.

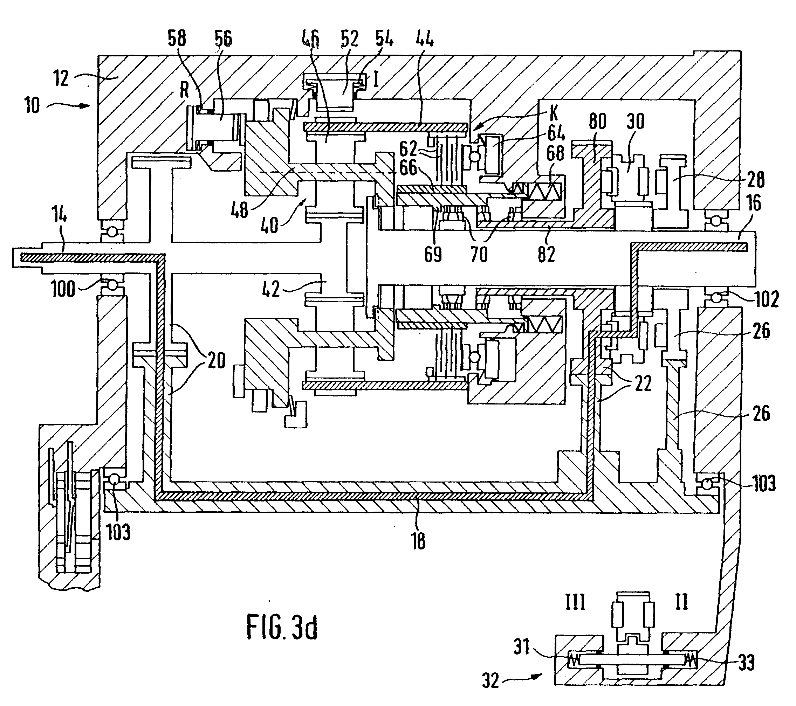

Nach dem Schaltvorgang ist im zweiten Gang ein Drehmomentenfluß erreicht, wie er in Fig. 3d schematisch dargestellt wird. Die Kupplung ist in diesem Zustand wieder gelöst.

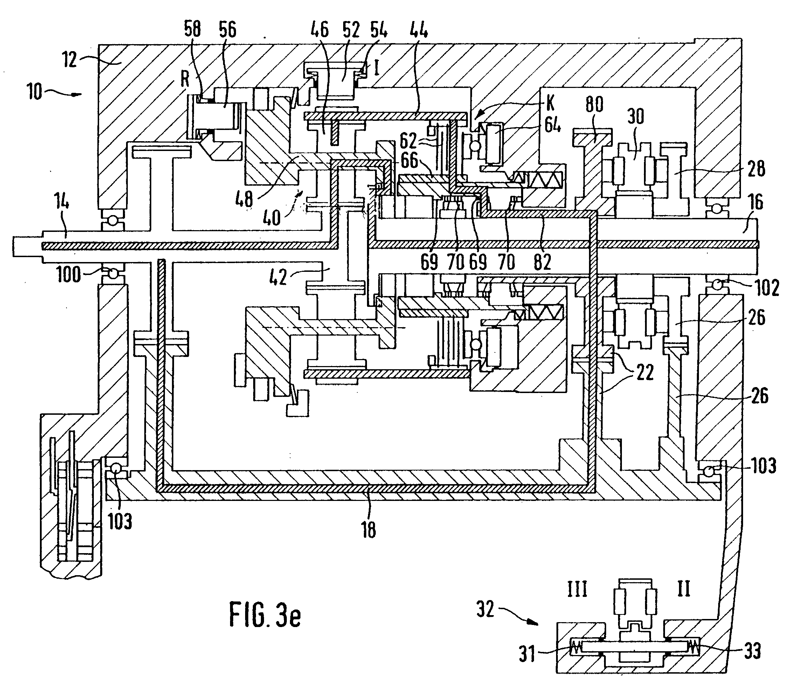

Wie vorgenannt bereits erwähnt, wird bei einem Übersetzungsverhältniswechsel von Gangstufe 2 auf 3 in ähnlicher Weise vorgegangen (Fig. 3e), indem die Kupplung K wiederum zur drehmomentübertragenden Verbindung von Hohlrad 44 und Antriebswelle 14 betätigt wird. Bei entsprechender Kupplungsbetätigung bzw. entsprechendem Kupplungsschlupf kann die Umdrehungszahl der Vorgelegewelle 18 und die Umdrehungszahl der Antriebswelle 16 derart angeglichen werden, daß zunächst das Stirnrad 80 und dann das Stirnrad 28 kräftefrei geschaltet werden können. Dabei wird bei den Schaltvorgängen die Schaltmuffe 30 von den Schaltzylindern 31 und 33 in Axialrichtung entsprechend den Gangstufen II oder III verschoben.

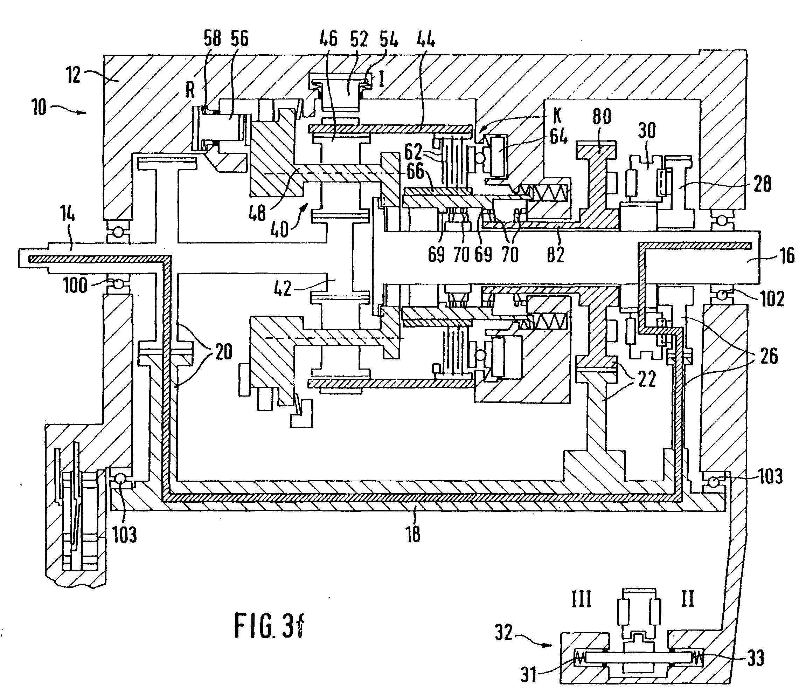

Entsprechend Fig. 3f ist bei der eingelegten dritten Gangstufe der Kraftfluß über das Zahnradpaar 26 hergestellt.

Schließlich kann durch zunächst erfolgende, axiale und kräftefreie Verschiebung der Kupplungsnabe 66 eine Verbindung zwischen der Kupplung und der Abtriebswelle 16 hergestellt werden. Bei Kupplungsbetätigung wird dann eine drehfeste Verbindung von Hohlrad 44 und Abtriebswelle 16 erreicht, so daß schließlich bei vollständig durchgeschalteter Kupplung K das Hohlrad 44 und der Planetenradträger 48 verblockt sind. insgesamt drent sich dann das Planetengetriebe 40 mit der Umdrehungszahl der Antriebswelle 14, wodurch eine Realisierung eines direkten Ganges erreicht werden kann.

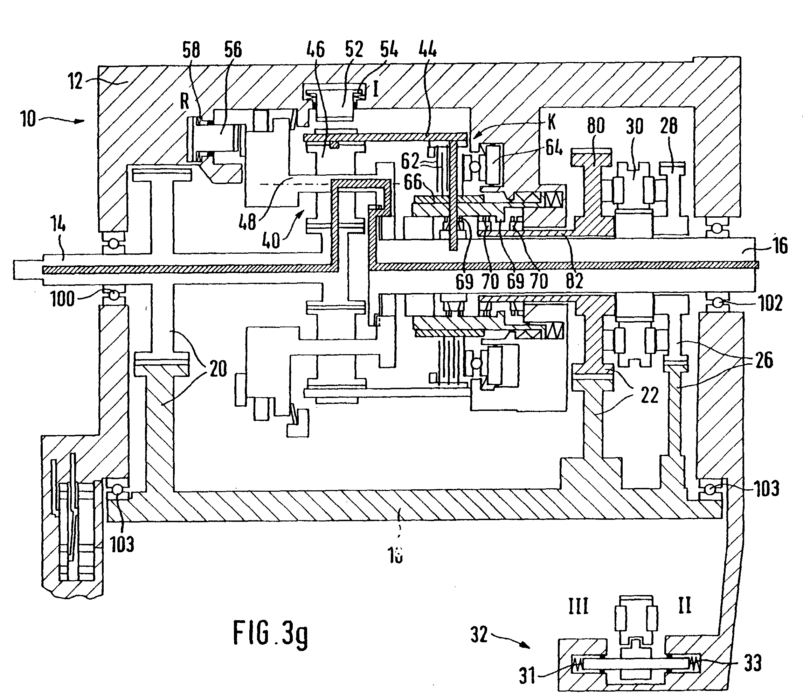

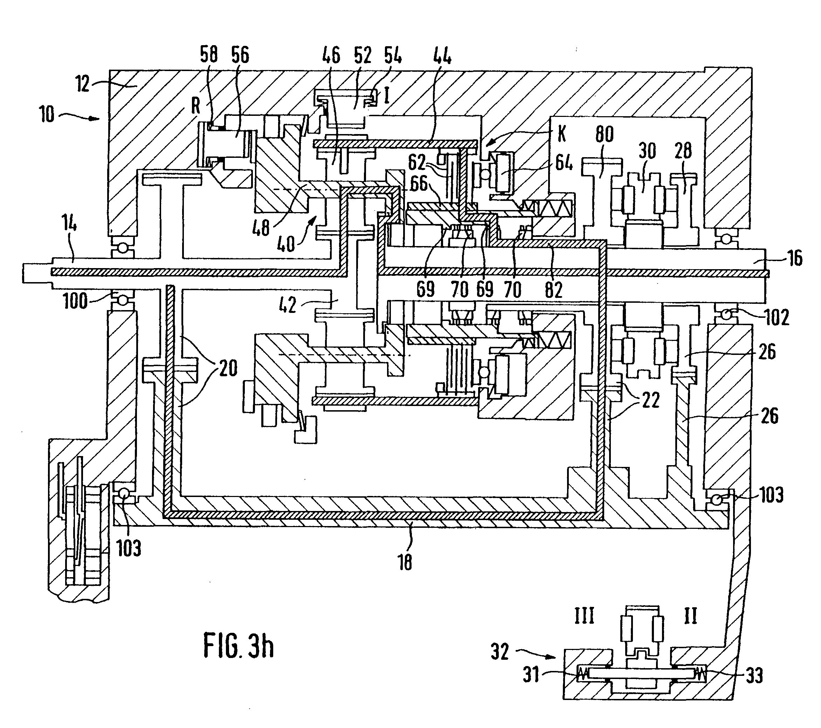

Bei den Rückschaltvorgängen von den Gangstufen 4 zu 3, 3 zu 2, 2 zu 1 sowie in den Leerlauf erfolgt die Betätigung der Kupplung in umgekehrter Weise. Entsprechend dem bei diesen Schaltvorgängen vorliegenden Kraft- bzw. Drehmomentflüssen wird auf die Fig. 3g bis 3h und die obige Beschreibung zu den bildgleichen Fig. 3a bis 3g hingewiesen. Bei den Fig 3g bis 3h entspricht Fig. 3g einem Momentenfluß bei der Rückschaltung 4 auf 3, 3 auf 2 und evtl. 3 auf 1. Fig. 3h stellt einen Momentfluß bei der Rückschaltung von 2 auf 1 dar. Es sind alternativ aber auch andere Kopplungen bei Rückschaltvorgängen möglich.

Unter anderem ist bei dem Wechselgetriebe gemäß Fig. 2 wesentlich, daß durch eine Kopplung des Hohlrades 44 über die Kupplung K, das Stirnrad 80, die Vorgelegewelle 18 und das Stirnradpaar 20 mit der Antriebswelle 14 eine Verschaltung von Hohlrad 44 und Sonnenrad 42 stattfinden kann, so daß eine Drehzahl- und Drehmomentangleichung zwischen der Antriebswelle 14 und der Abtriebswelle 16 sowie der Abtriebswelle 16 und den darauf angeordneten schaltbaren Stirnrädern 28, 80 stattfinden kann.

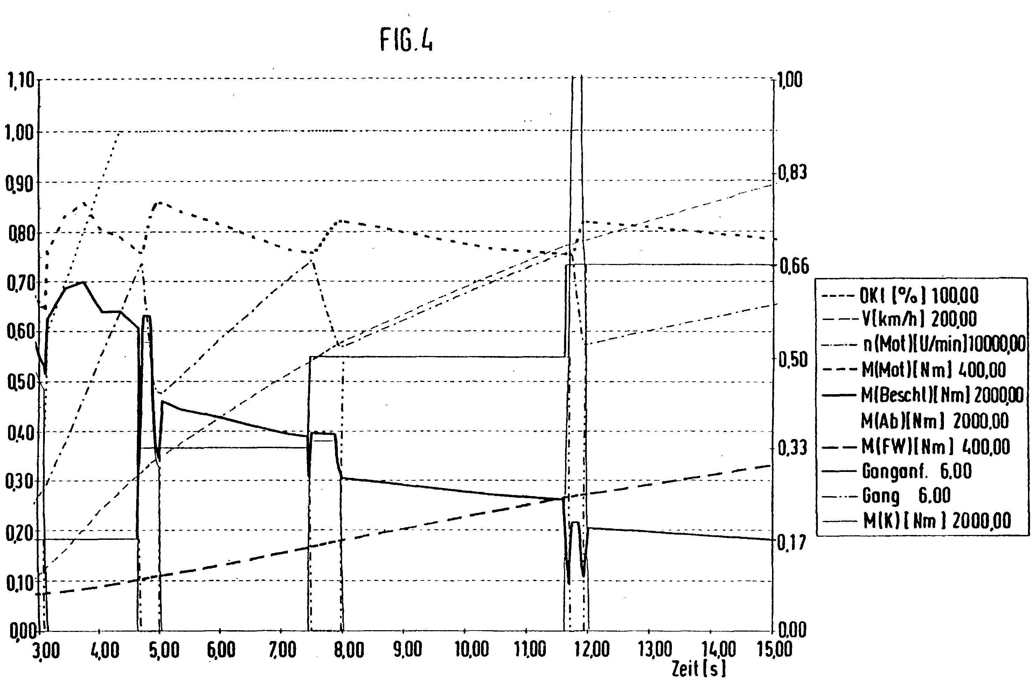

Der Vorteil eines erfindungsgemäßen Wechselgetriebes kann aus der Graphik in Fig. 4 ersehen werden. In dieser Graphik sind unter anderem aufgetragen die Drosselklappenstellung DKI, die Fahrzeuggeschwindigkeit V, die Motorumdrehung n(MOT), das Motordrehmoment M(MOT), das Beschleunigungsmoment M(Beschl), die Ganganforderung (Ganganf), der eingelegte Gang sowie das Kupplungsmoment M(k). Die Graphik zeigt die einzelnen Verläufe bei einer kontinuierlichen Fahrzeugbeschleunigung und entsprechenden Schaltvorgängen.

Ganz deutlich ist in Fig. 4 anhand der durchgezogenen Linie M(Beschl) zu erkennen, daß auch bei Schaltvorgängen, also bei Gangwechsel, das übertragene Moment niemals auf Null sinkt, sondern lediglich geringfügig einbricht. Somit kann bei einem kontinuierlichen Beschleunigungsvorgang und entsprechenden Schaltvorgängen eine kontinuierliche Momentübertragung vom Motor auf die Antriebsräder stattfinden.

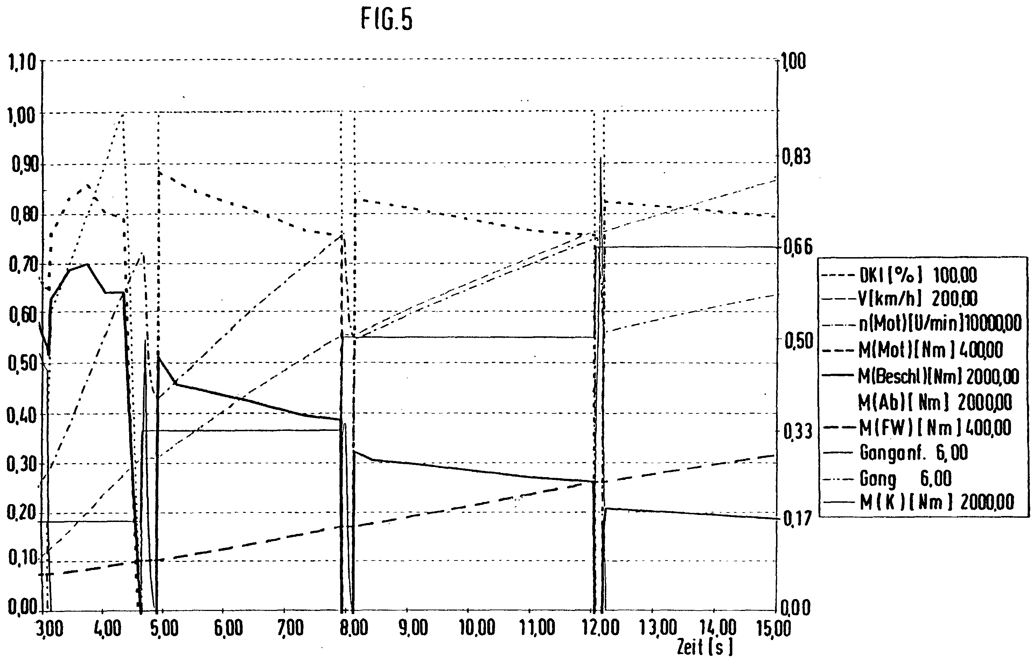

Im Gegensatz dazu ist in Fig. 5 ein entsprechendes Diagramm für ein normales Handschaltgetriebe aufgetragen. Aus diesem Diagramm läßt sich anhand der durchgezogenen Linie leicht erkennen, daß bei den entsprechenden Gangwechselvorgängen, das Beschleunigungsmoment jeweils auf Null sinkt. Dadurch kommen Lastunterbrechungen zustande, die sich in ruckartigen Bewegungen bemerkbar machen.

Insgesamt läßt sich mit dem Wechselgetriebe gemäß den vorliegenden Ausführungsbeispielen ein Automatikgetriebe realisieren, welches die Vorteile eines Handschaltgetriebes besitzt, nämlich einen hohen Wirkungsgrad sowie einen einfachen Aufbau, und darüber hinaus eine vollständige Lastunterbrechung beim Schalten wirkungsvoll verhindert. Ferner ist das erfindungsgemäße Wechselgetriebe durch dessen einfachen Aufbau kostengünstig sowie kompakt herzustellen. Es bedarf nur eines geringen Einbauraumes bei einem Kraftfahrzeug. Der Schaltkomfort entspricht dem eines Automatikgetriebes.

### Bezugszeichenliste

- 10: Wechselgetriebe
- 12: Gehäuse
- 14: Antriebswelle
- 16: Abtriebswelle
- 18: Vorgelegewelle
- 20: Antriebsstirnradpaar
- 22: Stirnradpaar
- 24: erstes Losrad
- 26: Stirnradpaar
- 28: zweites Losrad
- 30: Klauenkupplung mit Schaltmuffe
- 31: Schaltzylinder
- 32: Schaltvorrichtung für Klauenkupplung
- 33: Schaltzylinder
- 40: Planetengetriebe
- 42: Sonnenrad
- 44: Hohlrad
- 46: Planetenrad
- 48: Planetenradträger
- 52: erste Arretiervorrichtung
- 54: erster Schaltzylinder
- 56: zweite Arretiervorrichtung
- 58: zweiter Schaltzylinder
- K: Kupplung
- 62: Kupplungslamellen
- 64: Kupplungszylinder
- 66: Kupplungsnabe
- 68: Nabenzylinder
- 69: Nabennase
- 70: Synchronisierring
- 80: erstes Losrad
- 82: Hohlwelle
- 100: erstes Lager
- 102: zweites Lager
- 103: drittes Lager

## Patentansprüche

1. Wechselgetriebe, insbesondere für Kraftfahrzeuge, mit
- einer Antriebs- (14) und einer Abtriebswelle (16) sowie
- einer ersten, zwischen Antriebs- (14) und Abtriebswelle (16) angeordneten, drehmomentübertragenden und verschiedene Drehzahl-Übersetzungsverhältnisse ermöglichenden Einrichtung (18, 20, 22, 26), die in einer Arbeitsweise eine vollständige Kraftflußentkopplung von Antriebswelle (14) und Abtriebswelle (16) sicherstellt, und
- mit einer parallel zur ersten Einrichtung vorgesehenen zweiten Einrichtung (40, 42, 44, 46, 48, K) zur Drehmomentübertragung zwischen An- (14) und Abtriebswelle (16), mit der im Gegensatz zur ersten Einrichtung (18, 20, 22, 26) ein stufenlos wählbares Drehmoment im Bereich von Null bis zum maximal anliegenden Drehmoment übertragbar ist,
dadurch gekennzeichnet,
daß die zweite Einrichtung ein Umlaufgetriebe (40, 42, 44, 46, 48, K) umfaßt.

2. Wechselgetriebe nach Anspruch 1,
dadurch gekennzeichnet,
daß die zweite Einrichtung (40, 42, 44, 46, 48) eine auf Reibschluß basierende Wirkungseinheit (K) zur Drehmomentübertragung umfaßt.

3. Wechselgetriebe nach Anspruch 2,
dadurch gekennzeichnet,
daß die auf Reibschluß basierende Wirkungseinheit eine Kupplung (K) ist.

4. Wechselgetriebe nach Anspruch 3,
dadurch gekennzeichnet,
daß die Kupplung (K) hydraulisch oder pneumatisch betätigbar ist.

5. Wechselgetriebe nach einem der Ansprüche 3 oder 4,
dadurch gekennzeichnet,
daß die Kupplung (K) als Lamellenkupplung ausgebildet ist.

6. Wechselgetriebe nach einem der Ansprüche 2 bis 5,
dadurch gekennzeichnet,
daß die zweite drehmomentübertragenden Einrichtung, insbesondere die Kupplung (K), entsprechend der gewünschten Drehmomentübertragung zwischen An- und Abtriebswelle (14, 16) von einer Steuerung beaufschlagt wird, wobei die Steuerung derart ausgebildet ist, daß die Druckregulierung für die Kupplung (K) in Abhängigkeit von Motordrehzahl und/oder Antriebsdrehzahl und/oder eingelegtem/angefordertem Gang und/oder Abtriebsdrehzahlgradient und/oder Motordrehzahlgradient steuer- oder regelbar ist.

7. Wechselgetriebe nach einem der vorhergehenden Ansprüche,
dadurch gekennzeichnet,
daß die erste Einrichtung (18, 20, 22, 26) ein Schaltgetriebe ist, wobei zumindest ein Stirnradpaar (20, 22, 26) vorgesehen ist und zumindest ein schaltbares Stirnrad (24, 28, 80) von einer zugeordneten Welle (16, 18) oder einem komplementären Stirnrad des gleichen Stirnradpaares entkoppelbar ist.

8. Wechselgetriebe nach Anspruch 7,
dadurch gekennzeichnet,
daß parallel zur An- und/oder Abtriebswelle (14, 16) eine Vorgelegewelle (18) angeordnet und das zumindest eine schaltbare Stirnradpaar (22, 26) entweder zwischen Antriebswelle (14) und Vorgelegewelle (18) oder zwischen Vorgelegewelle (18) und Abtriebswelle (16) vorgesehen ist.

9. Wechselgetriebe nach einem der vorhergehenden Ansprüche,
dadurch gekennzeichnet,
daß das Umlaufgetriebe (40, 42, 44, 46, 48) verschiedene Übersetzungs- oder Drehzahlumkehrstufen aufweist.

10. Wechselgetriebe nach einem der vorhergehenden Ansprüche,
dadurch gekennzeichnet,
daß das Umlaufgetriebe ein Planetengetriebe (40, 42, 44, 46, 48) ist.

11. Wechselgetriebe nach Anspruch 10,
dadurch gekennzeichnet,
daß die Kupplung (K) planetengetriebeseitig am Hohlrad (44) angreift.

12. Wechselgetriebe nach Anspruch 10 oder 11,
dadurch gekennzeichnet,
daß das Hohlrad (44) mittels einer Arretiervorrichtung (52, 54) gegenüber einem Getriebegehäuse (12) feststellbar ist.

13. Wechselgetriebe nach einem der Ansprüche 10 bis 12,
dadurch gekennzeichnet,
daß die Welle des Sonnenrades (42) mit der Antriebswelle (14) und der Planetenradträger (48) mit der Abtriebswelle (16) gekoppelt oder koppelbar sind oder daß der Planetenradträger (48) mit der Antriebswelle (14) und die Welle des Sonnenrades (42) mit der Abtriebswelle (16) gekoppelt oder koppelbar sind.

14. Wechselgetriebe nach einem der Ansprüche 10 bis 13,
dadurch gekennzeichnet,
daß der Planetenradträger (48) von der An- oder Abtriebswelle (14, 16) entkoppelbar ist.

15. Wechselgetriebe nach Anspruch 14,
dadurch gekennzeichnet,
daß die Entkoppelung durch axiale Verschiebung des Planetenradträgers (48) vorgesehen ist.

16. Wechselgetriebe nach einem der Ansprüche 10 bis 15,
dadurch gekennzeichnet,
daß die Kupplung (K) einerseits mittel- oder unmittelbar an der Antriebs- oder Abtriebswelle (14, 16) oder den daran angeordneten schaltbaren Stirnrädern (80) und andererseits an einem der Planetengetriebeelemente (Sonnenrad, Planetenradträger, Hohlrad) angreift, wobei die zu diesem Planetengetriebeelement zugehörige Welle keine direkte Verbindung zur Abtriebs- oder Antriebswelle (14, 16) besitzt.

17. Wechselgetriebe nach einem der Ansprüche 10 bis 16,
dadurch gekennzeichnet,
daß zwischen der Kupplung (K) einerseits und der Antriebs- oder Abtriebswelle (14, 16) sowie den daran angeordneten schaltbaren Stirnrädern (80) andererseits eine Umschalteinrichtung (66, 68, 69) vorgesehen ist, die eine schaltbare Kopplung zwischen dem mit der Kupplung (K) verbundenen Planetengetriebeelement einerseits und wahlweise der Antriebs- oder Abtriebswelle (14, 16), den daran angeordneten schaltbaren Stirnrädern (80) oder dem Getriebegehäuse (12) andererseits ermöglicht.

18. Wechselgetriebe nach Anspruch 17,
dadurch gekennzeichnet,
daß die Umschalteinrichtung (66, 68, 69) eine mittel- oder unmittelbar auf der Abtriebswelle (16) in deren Axialrichtung verschiebbare Kupplungsnabe (66) umfaßt, wobei je nach Axialverschiebung der Kupplungsnabe (66) eine Verbindung zwischen dieser und der Abtriebswelle (16) oder einem schaltbaren Stirnrad (80) oder dem Getriebegehäuse (12) herstellbar ist.

19. Wechselgetriebe nach Anspruch 17 oder 18,
dadurch gekennzeichnet,
daß das mit der Umschalteinrichtung (66, 68, 69) verbindbare schaltbare Stirnrad (80) eine Hohlwelle (82) aufweist, durch die hindurch sich die An- (14) oder Abtriebswelle (16) erstreckt.

20. Wechselgetriebe nach Anspruch ,
dadurch gekennzeichnet,
daß die Umschaltvorrichtung elektromechanisch und/oder hydraulisch oder pneumatisch betätigbar sind.

21. Wechselgetriebe nach einem der vorhergehenden Ansprüche,
dadurch gekennzeichnet,
daß eine Direktkoppeleinrichtung vorgesehen ist, die eine unmittelbare Kopplung von An- und Abtriebswelle (14, 16) ermöglicht.

## Claims

1. A change-speed gear, particularly for motor vehicles, comprising
- a drive shaft (14) and a driven shaft (16) and
- a first device (18, 20, 22, 26) disposed between the drive shaft (14) and the driven shaft (16) and transmitting torque and used for obtaining various speed transmission ratios and in one mode of operation ensuring complete uncoupling of the flow of force between the drive shaft (14) and the driven shaft (16) and
- a second device (40, 42, 44, 46, 48, K) disposed parallel to the first device for transmitting torque between the drive shaft (14) and the driven shaft (16), in order in contrast to the first device (18, 20, 22, 26) to transmit a steplessly selectable torque in the range from zero to the maximum applied torque,
characterised in that
the second device comprises an epicylic gear (40, 42, 44, 46, 48, K).

2. A change-speed gear according to claim 1, characterised in that the second device (40, 42, 44, 46, 48) comprises an operating unit (K) based on frictional engagement for transmission of torque.

3. A change-speed gear according to claim 2, characterised in that the operating unit based on frictional engagement is a clutch (K).

4. A change-speed gear according to claim 3, characterised in that the clutch (K) is hydraulically or pneumatically operated.

5. A change-speed gear according to claims 3 or 4, characterised in that the clutch (K) is a disc clutch.

6. A change-speed gear according to any of claims 2 to 5, characterised in that the second torque-transmitting device, particularly the clutch (K), is actuated by a control means in dependence on the desired torque transmission between the drive shaft (14) and the driven shaft (16), the control means being designed sc that the pressure regulation for the clutch (K) is controllable in an open or closed loop in dependence on the engine speed and/or the driving speed and/or the engaged or required gear and/or the driven speed gradient and/or the engine speed gradient.

7. A change-speed gear according to any of the preceding claims, characterised in that the first device (18, 20, 22, 23) is a gear-shift mechanism, wherein at least one pair of spur gears (20, 22, 26) is provided and at least one shiftable spur gear (24, 28, 80) can be uncoupled from an associated shaft (16, 18) or a complementary spur gear in the said pair of spur gears.

8. A change-speed gear according to claim 7, characterised in that a back-gear shaft (18) is disposed parallel to the drive shaft (14) and/or the driven shaft (16) and the at least one shiftable pair of spur gears (22, 26) are provided either between the drive shaft (14) and the back-gear shaft (18) or between the back-gear shaft (18) and the driven shaft (16).

9. A change-speed gear according to any of the preceding claims, characterised in that the epicyclic gear (40, 42, 44, 46, 48) has various step-up or speed-reversal stages.

10. A change-speed gear according to any of the preceding claims, characterised in that the epicyclic gear is a planetary gear (40, 42, 44, 46, 48).

11. A change-speed gear according to claim 10, characterised in that the clutch (K) engages the ring gear (44) on the planet-gear side.

12. A change-speed gear according to claim 10 or 11, characterised in that the ring gear (44) is lockable by a locking device (52, 54) relative to a gear case (12).

13. A change-speed gear according to any of claims 10 to 12, characterised in that the shaft of the sun wheel (42) is or can be coupled to the drive shaft (14) and the planet carrier (48) is or can be coupled to the driven shaft (16) or the planet carrier (48) is or can be coupled to the drive shaft (14) and the shaft of the sun wheel (42) is or can be coupled to the driven shaft (16).

14. A change-speed gear according to any of claims 10 to 13, characterised in that the planet carrier (48) can be uncoupled from the drive shaft (14) or the driven shaft (16).

15. A change-speed gear according to claim 14, characterised in that uncoupling is effected by axial displacement of the planet carrier (48).

16. A change-speed gear according to any of claims 10 to 15, characterised in that the clutch (K) on one side directly or indirectly engages the drive shaft (14) or the driven shaft (16) or the shiftable spur gears (80) disposed thereon and on the other side engages a planet-gear component (sun wheel, planet carrier or ring gear), whereas the shaft associated with the planet gear component has no direct connection to the driven or drive shaft (14, 16).

17. A change-speed gear according to any of claims 10 to 16, characterised in that a change-over device (66, 68, 69) is provided between the clutch (K) on the one hand and the drive or the driven shaft (14, 16) and the shiftable spur gears (80) disposed thereupon on the other hand and is used for shiftable coupling between on the one hand the planetary gear component connected to the clutch (K) and on the other hand the drive shaft or the driven shaft (14, 16) or the shiftable spur gears (80) disposed thereon or the gear case (12) at choice.

18. A change-speed gear according to claim 17, characterised in that the change-over device (66, 68, 69) comprises a clutch hub movable directly or indirectly on the driven shaft (16) in the axial direction thereof and, depending on the axial displacement of the clutch hub (66), a connection can be made between it and the driven shaft (16) or a shiftable spur gear (80) or the gear case (12).

19. A change-speed gear according to claim 17 or 18, characterised in that the shiftable spur gear (80) for connecting to the change-over device (66, 68, 69) comprises a hollow shaft (82) through which the drive shaft (14) or the driven shaft (16) extends.

20. A change-speed gear according to claim, characterised in that the change-over device is electromechanically and/or hydraulically or pneumatically operated.

21. A change-speed gear according to any of the preceding claims, characterised in that a direct coupling device is provided for directly coupling the drive shaft (14) to the driven shaft (16) speed .

## Revendications

1. Boîte de vitesses, en particulier pour véhicules automobiles comprenant :
• un arbre d'entrée (14) et un arbre de sortie (16),
• entre les arbres (14) et (16) un premier dispositif (18, 20, 22, 26) transmettant les couples, permettant différents rapports de transmission des vitesses de rotation et garantissant dans un certain mode opératoire un total désaccouplement des arbres (14) et (16) en ce qui concerne le flux des forces, et
• monté en parallèle avec le premier dispositif, un deuxième dispositif (40, 42, 44, 46, 48, K) servant à transmettre les couples entre les arbres (14) et (16) mais, à l'opposé du premier dispositif (18, 20, 22, 26), pouvant transmettre un couple quelconque choisi dans une plage s'étendant de zéro à la valeur maximale du couple existant,
caractérisée en ce que
le second dispositif comprend un engrenage planétaire (40, 42, 44, 46, 48, K).

2. Boîte de vitesses selon la revendication 1,
caractérisée en ce que
le second dispositif (40, 42, 44, 46, 48) comprend une unité active (K) de transmission du couple basée sur un verrouillage à friction.

3. Boîte de vitesses selon la revendication 2,
caractérisée en ce que
l'unité active basée sur un verrouillage à friction est un embrayage (K).

4. Boîte de vitesses selon la revendication 4,
caractérisée en ce que
l'embrayage (K) peut être à commande hydraulique ou pneumatique.

5. Boîte de vitesses selon la revendication 3 ou 4,
caractérisée en ce que
l'embrayage (K) est un embrayage à lamelles.

6. Boîte de vitesses selon l'une quelconque des revendications 2 à 5,
caractérisée en ce que
le second dispositif transmettant les couples, en particulier l'embrayage (K), en correspondance avec la transmission souhaitée du couple entre les arbres d'entrée et de sortie (14, 16) est actionné par une commande constituée de manière que la régulation de la pression alimentant l'embrayage (K) peut être commandée ou régulée en fonction de la vitesse du moteur et/ou de la vitesse engagée/demandée et/ou du gradient de la vitesse de sortie et/ou du gradient de la vitesse du moteur.

7. Boîte de vitesses selon une des revendications précédentes,
caractérisée en ce que
le premier dispositif (18, 20, 22, 26) est une boîte de commutation, comportant au moins une paire de pignons droits (20, 22, 26), et dans laquelle au moins un pignon droit commutable (24, 28, 80) peut être désaccouplé d'un arbre associé (16, 18) ou du pignon droit qui est son complémentaire dans sa paire de pignons.

8. Boîte de vitesses selon la revendication 7,
caractérisée en ce qu'
un arbre intermédiaire (18) est monté parallèlement aux arbres d'entrée et de sortie (14, 16) et il est prévu au moins une paire de pignons de commutation (22, 26) soit entre l'arbre d'entrée (14) et l'arbre intermédiaire (18), soit entre l'arbre intermédiaire (18) et l'arbre de sortie (16).

9. Boîte de vitesses selon une des revendications précédentes,
caractérisée en ce que
l'engrenage planétaire (40, 42, 44, 46, 48) présente différents rapports de multiplication ou d'inversion de la vitesse de rotation.

10. Boîte de vitesses selon une des revendications précédentes,
caractérisée en ce que
l'engrenage planétaire est un réducteur planétaire (40, 42, 44, 46, 48).

11. Boîte de vitesses selon la revendication 10,
caractérisée en ce que
l'embrayage (K) est en prise avec le réducteur planétaire à travers la roue creuse (44) de celui-ci.

12. Boîte de vitesses selon la revendication 10 ou 11,
caractérisée en ce que
la roue creuse (44) peut être immobilisée par rapport au boîtier (12) de la boîte de vitesses, par un dispositif d'arrêt (52, 54).

13. Boîte de vitesses selon l'une quelconque des revendications 10 à 12,
caractérisée en ce que
l'arbre du pignon planétaire (42) et le porte-satellites (48) sont accouplés ou peuvent être accouplés respectivement à l'arbre d'entrée (14) et à l'arbre de sortie (16), tandis que l'arbre du pignon solaire (42) est accouplé ou peut être accouplé à l'arbre de sortie (16).

14. Boîte de vitesses selon l'une quelconque des revendications 10 à 13,
caractérisée en ce que
le porte-satellites (48) peut être désaccouplé de l'arbre d'entrée ou de sortie (14, 16).

15. Boîte de vitesses selon la revendication 14,
caractérisée en ce que
le désaccouplement est prévu par coulissement axial du porte-satellites (48).

16. Boîte de vitesses selon l'une quelconque des revendications 10 à 15,
caractérisée en ce que
l'embrayage (K) est en prise, d'un côté directement ou indirectement avec l'arbre d'entrée ou de sortie (14, 16) ou avec les pignons droits (80) commutables montés sur ces arbres, et de l'autre côté avec un des éléments du réducteur planétaire (pignon solaire, porte-satellites, roue creuse), l'arbre appartenant à cet élément n'ayant aucune liaison directe avec l'arbre d'entrée ou de sortie (14, 16).

17. Boîte de vitesses selon l'une quelconque des revendications 10 à 16,
caractérisée en ce qu'
entre l'embrayage (K) d'une part, l'arbre d'entrée ou de sortie (14, 16) ainsi que les pignons droits commutables (80) montés sur ceux-ci d'autre part, il est prévu un dispositif de commutation (66, 68, 69) qui permet de réaliser un accouplement commutable entre l'élément du réducteur planétaire relié à l'embrayage (K) d'une part, et, au choix, l'arbre d'entrée ou de sortie (14, 16), les pignons droits (80) montés sur ceux-ci ou le boîtier (12) d'autre part.

18. Boîte de vitesses selon la revendication 17,
caractérisée en ce que
le dispositif de commutation (66, 68, 69) comprend un moyeu d'embrayage (66) pouvant coulisser directement ou indirectement sur l'arbre de sortie (16) selon la direction axiale de celui-ci, de sorte que chaque fois, après coulissement axial du moyeu d'embrayage (66), une liaison peut être établie entre ce moyeu et l'arbre de sortie (16) ou un pignon droit commutable (80) ou le boîtier (12).

19. Boîte de vitesses selon la revendication 17 ou 18,
caractérisée en ce que
le pignon droit commutable (80) qui peut être relié au dispositif de commutation (66, 68, 69) présente un arbre creux (82) traversé par l'arbre d'entrée (14) ou de sortie (16).

20. Boîte de vitesses selon la revendications 17,
caractérisée en ce que
le dispositif de commutation est à commande électromécanique et/ou hydraulique ou pneumatique.

21. Boîtes de vitesses selon une des revendications précédentes,
caractérisée en ce qu'
un dispositif d'accouplement direct permet d'accoupler directement l'arbre d'entrée (14) et l'arbre de sortie (16).
